Europäisches Patentamt

European Patent Office

Office européen des brevets

(11) Publication number: **0 192 110**
**B1**

# EUROPEAN PATENT SPECIFICATION

(45) Date of publication of patent specification: **03.05.89**

(21) Application number: **86101343.1**

(22) Date of filing: **03.02.86**

(51) Int. Cl.⁴: **B 60 H 1/34, F 24 F 13/075**

(54) Air outlet unit for air conditioning or ventilation systems in motor vehicles.

(30) Priority: **19.02.85 IT 6716985**

(43) Date of publication of application:
**27.08.86 Bulletin 86/35**

(45) Publication of the grant of the patent:
**03.05.89 Bulletin 89/18**

(84) Designated Contracting States:
**DE FR GB**

(56) References cited:
**DE-A-3 202 355**
**GB-A- 581 266**
**GB-A- 826 116**
**GB-A-1 227 157**
**US-A-2 626 556**
**US-A-4 018 159**

(73) Proprietor: **FOGGINI PROGETTI S.r.l.**
**Via Aosta, 17**
**I-10092 Beinasco Torino (IT)**

(72) Inventor: **Foggini, Paolo**
**Strada Moncalieri 2**
**I-10020 Revigliasco (IT)**

(74) Representative: **Modiano, Guido et al**
**MODIANO, JOSIF, PISANTY & STAUB Modiano**
**& Associati Via Meravigli, 16**
**I-20123 Milan (IT)**

Courier Press, Leamington Spa, England.

## Description

The present invention relates to an air outlet unit for air conditioning or ventilation systems in motor vehicles.

As is known for example from GB—A—227157, air dispensing outlets or ventilation devices are eqipped with a butterfly valve for intercepting the airflow and with a double array of vanes for directing the flow in the horizontal and vertical planes. Each of these members is actuated through a corresponding control generally comprising a handwheel slightly protruding from the outlet bezel. Operating three separate controls may be sometimes inconvenient, and not being instinctive, may distract the driver.

Furthermore, the kinematic transmissions interposed between each control and the corresponding driven member, aggravate space requirements and appreciably complicate the outlet fitting's construction, thus being disadvantageous regarding manufacturing costs and operating reliability.

From DE—A—3202355 is known an air outlet unit having a single manually operable member to control direction and outflow of air, but the outlet of air is provided through small tubes integrated into the fascia panel of a vehicle. Said small tube can provide but little outflow of air and limited variation of airflow direction.

The present invention is directed essentially to obviate such shortcomings, and has the important object of providing an air outlet unit for air conditioning or ventilation systems in motor vehicles provided with a double array of mutually transverse vanes and equipped with a simplified and instinctively operable control, that is one which requires only minimal attention of the vehicle's driver, the device having at the same time a relatively simple construction and being reliable in operation.

With respect to GB—A—1227157 which discloses already an air outlet unit for air conditioning or ventilation systems in motor vehicles comprising a double array of vanes including a first array of vanes and a second array of vanes arranged transversely to said first array for directing a flow of air in horizontal and respectively vertical planes, a butterfly valve arranged for intercepting said flow of air, a single key oscillable about two distinct axes for selectively controlling said double array of vanes, first means for transferring the oscillation of said key about said distinct axes to said vanes, the present invention is essentially characterised in that said key is also translatable longitudinally thereof, there being further provided second means for selectively transferring the translation of said key to said butterfly valve.

According to another aspect of the invention, there is provided an air outlet unit, characterised in that said oscillating axes of said key are reciprocally orthogonal, said key being a tilting one secured for oscillation to the end of a plunger rod biased by a spring, the oscillation about each of said orthogonal axes causing a corresponding movement of a respective one of said first and second array of vanes, the translation of said plunger rod causing the movement of said butterfly valve between an open and a closed position thereof.

Preferably, the key movements are transmitted to the valve and vanes through corresponding flexible sleeved wire cables of the Bowden type, and the valve control is of the push-push type using a rocker arm with an end pin cooperating with a face cam formed with a cardioid-shaped retaining projection.

According to another aspect of the invention, the key movements are transmitted to said valve and vanes by means of kinematic transmissions, such as lever systems, and according to a further aspect of the invention, the transmission is a composite one, including levers or the like — e.g. to control the shutter valve — and part cable-operated.

Further features and advantages will be apparent from the following detailed description, with reference to the accompanying drawings, where:

Figure 1 is a longitudinal mid-section of an air outlet unit with a single airflow orienting and intercepting key according to this invention;

Figure 2 is a cut-away perspective view showing diagrammatically the flow orienting and intercepting members and their control procedure by means of said single key; in that view the shutter valve being shown in the closed position;

Figure 3 is a perspective detail view of Figure 2 showing the shutter valve in its open position;

Figure 4 is a longitudinal sectional view similar to Figure 1, showing another aspect of the outlet unit according to the invention;

Figure 5 is a detail sectional view taken along the line V—V of Figure 4;

Figure 6 is a detail sectional view taken along the line VI—VI of Figure 4;

Figure 7 is a detail sectional view taken along the line VII—VII of Figure 4;

Figure 8 is a longitudinal sectional view of an outlet unit according to a further aspect of the invention;

Figure 9 is a sectional view taken along the line IX—IX of Figure 8; and

Figure 10 is a sectional view taken along the line X—X of Figure 8.

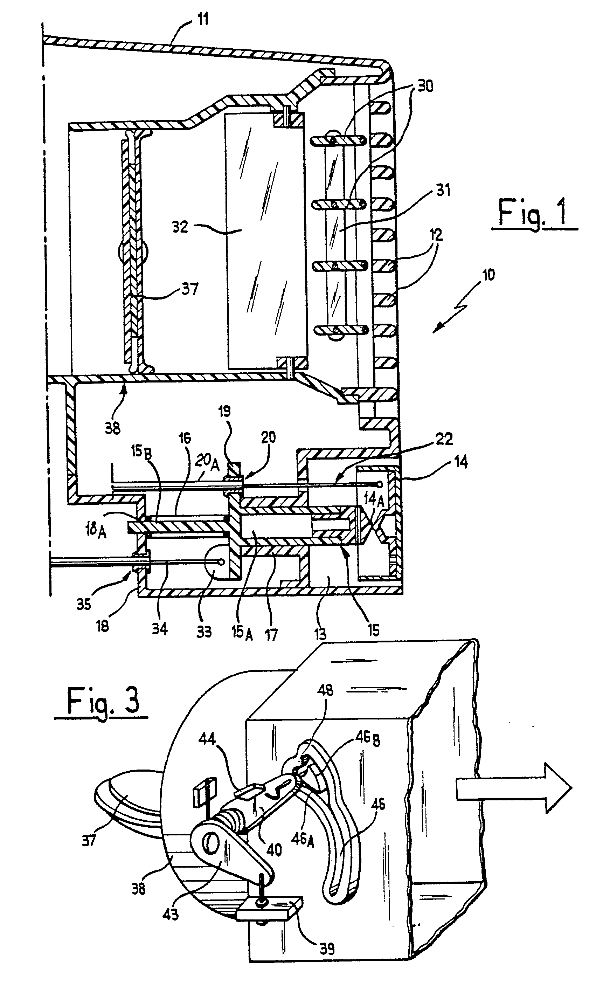

With reference initially to Figures 1 to 3, the reference numeral 10 generally denotes the dispensing air outlet unit or fitting of this invention which comprises an outer case 11 advantageously of a polymeric material provided with a bezel carrying a grid diffuser 12 and a seat 13 underlying the grid wherein a rockable or tiltable key 14 is housed. The key is secured to the end of a plunger rod 15 for oscillation about two axes a—b orthogonal to each other and laid the one parallel to the vertical direction and the other parallel to the horizontal direction.

The attachment of the key 14 to the rod 15 is of the universal or cardan type and if said rod and key are of a polymeric material, it is advantageously composed of at least one peduncle or narrowed portion of said common material such that the oscillable connection between the rod and key is formed on moulding. The plunger rod 15 is axially movable against the action of a spring 16 and guided with a larger diameter portion 15A thereof in a cylindrical bush 17 of the bezel and with a smaller diameter portion 15B thereof in the hole 18a in a wall 18 of the case 11. The two rod portions are separated by a plate 19 rigidly associated or formed integrally with the rod itself and hence subjectable to the axial displacement of the rod produced by a normal stress applied to actuate the key 14.

With the plate 19 there are rigidly associated the ends 20—21 of first and second sleeves of corresponding flexible cables 22—23 of the Bowden wire type. One end of the cable 22 is articulated to an eye 22a of the key 14 vertically offcentered in relation to the axis of the rod 15; one end of the cable 23 is articulated to a corresponding eye 23a of the key 14 horizontally offcentered in relation to said axis of the rod 15.

The other end of the cable 22 is articulated to an eye 22b carried on the first vane of an array of horizontal vanes 30 supported oscillably within the case 11 and being interconnected by a rod 31; the second end 24 of the cable 22 sleeve reacting against a fixed wall 25 rigidly associated with the case 11.

Likewise the other end of the cable 23 is articulated to an eye 23b carried on the first vane of an array of vertical vanes 32 also supported oscillably within the case 11 and interconnected by a conventional rod (not shown); the second end 26 of the cable 23 sleeve being reacted by a fixed wall 27 of the case 11. The plate 19 of the rod 15 carries in turn an eye 33 whereto the end of a flexible cable 34 is articulated the sleeve 34a whereof has an end 35 adapted to react against the wall 18 of the case 11.

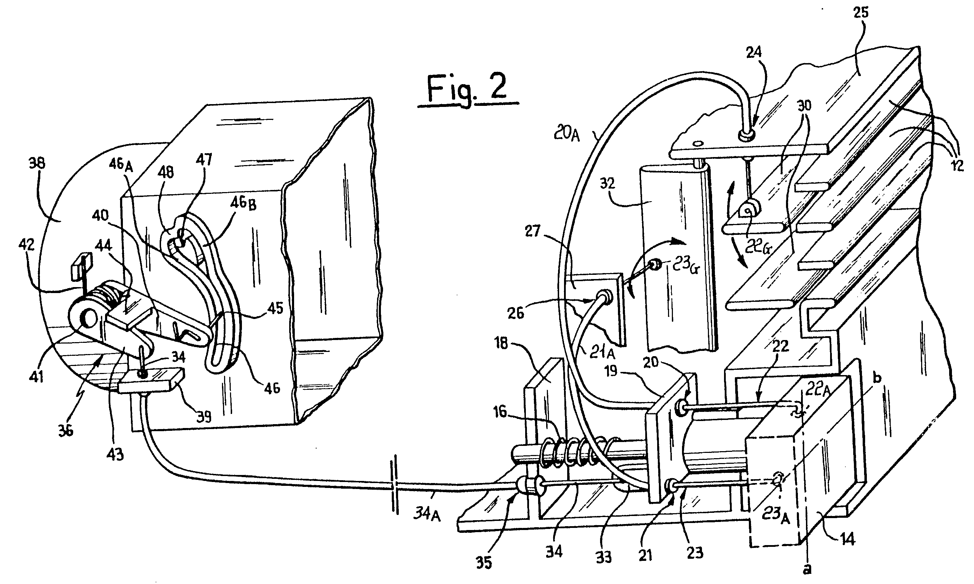

The other end of the cable 34 is articulated to a control lever system 36 for the shutter valve 37 formed of an oscillable butterfly contained in a manifold 38 of the case 11 to which the conventional air supply hose (not shown) connects. A rigid bracket 39, rigidly associated with the manifold 38, forms the reaction element for the second end of the cable sleeve 34a. The lever system 36 is composed of a first arm 40 keyed on the pin 41 of the valve 37 and subjected to the action of spring means such as a hairpin spring 42 tending to hold or bias the valve in the closed position and a second arm 43 mounted idly rotatable on said pin 41; the arm 43 being subjectable to the action of the cable 34. The first arm 40 carries a protruding wing 44 adapted to be engaged positively by the second arm 43 — to entrain the first arm 40 — as said second arm is urged by the cable 34 to turn in the direction which corresponds to the valve 37 being open (counterclockwise with reference to Figure 2).

As clearly shown in Figure 2, the arm 40 carries an end pin 45 which engages in a track 46 of a face cam which bifurcates upwardly into two track portions 46A—46B, respectively for the upward and downward movements of the pin 45. The two track portions are separated by a cardioid-shaped projection wherein a notch 47 is formed which receives the pin 45 for holding the arm 40 in the valve 37 opening position.

Upwardly of the notch 47, there is provided a tip 48 adapted to deflect the pin in the downward branch 46B upon said pin being urged to leave the notch 47. The valve control mechanism is thus actuated to open and close by a dual depression of the key 14 and is of the so-called push-push or double thrust type drive.

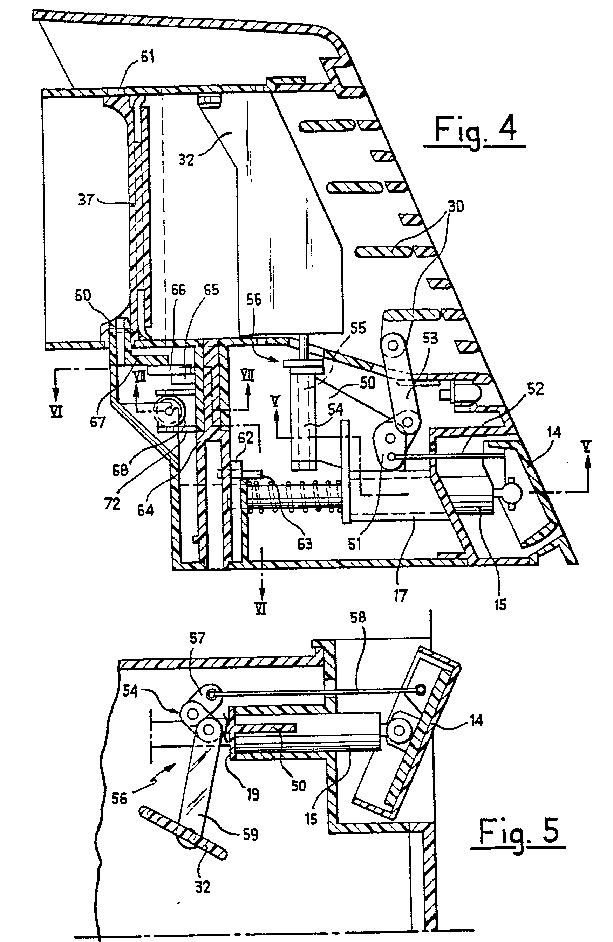

When the arm 40 is held in the valve opening position by the pin 45 engaging with the notch 47, the arm 43 is returned to the original position (Figure 3) by the spring 16 acting on the key rod 15.

From the foregoing description, it may be appreciated that the oscillation of the tilting key 14 about the horizontal axis "b" will cause the cable 22 to slide inside its respective sleeve and produce a corresponding angular displacement of the horizontal vane array 30 which direct the flow in the vertical plane; that displacement applying no tension on the cable 23 the articulation point of which is located at said horizontal axis of the key 14.

Similarly the oscillation of the key about the vertical axis "a" brings about the corresponding angular movement of the vertical vane array 32 which direct the flow in the horizontal plane without placing the cable 22 under stress because of the fact that the articulation point thereof lies on said vertical axis "a" of said key 14.

It may also be appreciated that the axial translation of the key 14 to control the valve 37 does not excert stress on the small cables 22—23 since the plate 19, being rigidly associated with the rod 15, moves with the key itself.

To meet particular space requirements the sleeves of the flexible cables may be at least partially replaced by corresponding canalisations moulded in the outer case 11 of the outlet fitting 10.

In the variation of Figures 4 to 7, where like or corresponding parts are indicated by the same reference numerals, the movements of the key 14 are transferred to the two vane arrays 30—32 and the valve 37 by means of kinematic transmission means of the lever system type. For that purpose the plate 19 carries an integral rib 50 placed edgewise and extending substantially orthogonal to the plate itself. The rib 50 carries a first lever system comprising a first rocker arm 51 to one end of which there is articulated a first small rigid rod 52 articulated, with the opposed end, to a point on the key 14 vertically offcentered with respect to the axis of the rod 15.

To the other end of the rocker arm there is journalled the end of a small connecting rod 53 the other end of which is journalled to the first vane of the horizontal array 30. The rib 50 moves with the plate 19 as the key 14 is translated and the small connecting rod 53, turning about the respective articulation points, leaves the position of the vanes 30 unchanged which, vice versa as clearly shown in Figure 4, will oscillate upon corresponding oscillations of the key 14 about the horizontal axis extending through the centre of the articulation swivel interposed to said key and rod 15. On the end of the rib 50 there is provided a tube 54 carrying a pin 55 on which there articulates a second lever system 56 for transferring the movements of the key 14 to the vertical vanes 32. That second lever system is in turn composed (Figure 5) of a second rocker arm 57 to one end of which there is articulated the end of a second small rigid rod 58 articulated, with the opposed end, to a point of the key 14 horizontally offcentered in relation to the axis of the rod 15.

On the other end of the rocker arm 57 there is journalled the end of a second small connecting rod 59, the other end of which is journalled on the first vane of the vertical array 32. The operation of this second lever system is identical to what has been described previously as the key 14 is caused to oscillate about the vertical axis.

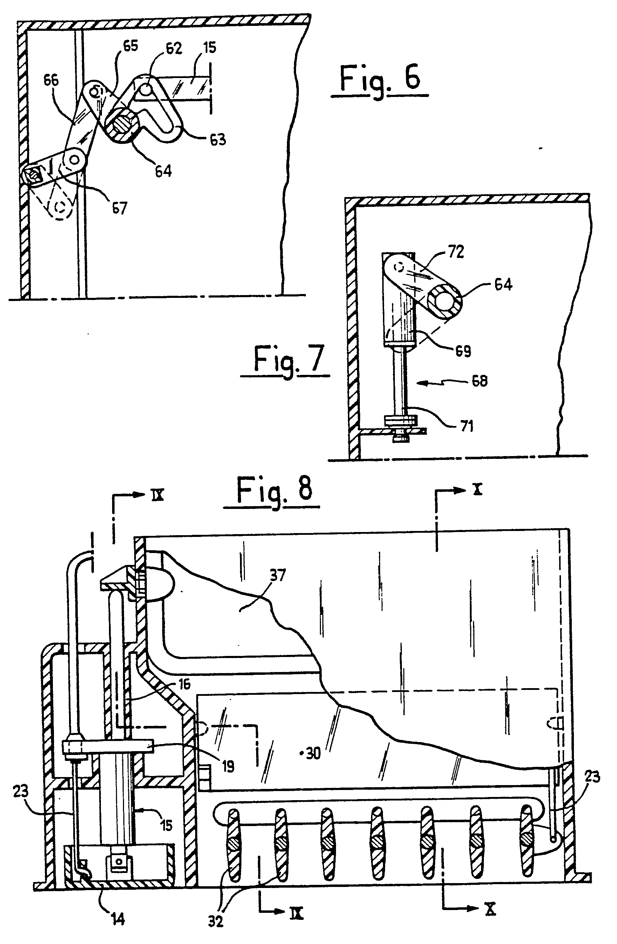

To control the valve 37, which in that version is oscillable about a vertical axis defined by vertical pins 60—61, a third lever system is employed which is operated by the end of the rod 15. For this purpose, the end of the rod 15 is provided with an articulation or gudgeon pin 62 which engages in a slot of a right angle crank-and-slot link 63 (Figure 6) rigidly associated with a vertical pin 64. The latter also carries, at a higher elevation than the right angle crank-and-slot link 63, a crank lever 65 which drives, through a small connecting rod 66, a second crank lever 67 fast with the valve pin 60. The crank-and-slot link 63 allows for the unloaded return of the rod 15 when, after an opening thrust has been exerted, the valve 37 stays in that position being held back by a push-push retaining ram device 68 of the type detailedly described in the prior European patent application N. 0131909 filed on 11th July 1984 by the same Applicant. The device 68 has the cylindrical body 69 articulated to a yoke 70 of the pin 64 and the end of the stem 71 engaged in a bracket 72 rigid with the body of the outlet fitting.

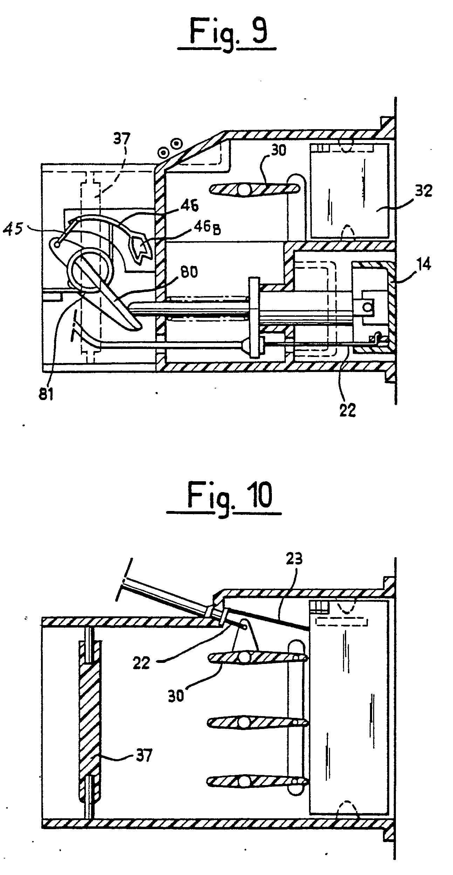

The variation of Figures 8 to 10 relates to a composite solution wherein the valve 37 is controlled by a first kinematic transmission and the double array of horizontal 30 and vertical 32 vanes are controlled by means of corresponding flexible sleeve cables 22 and 23 articulated to the key 14 at points vertically and horizontally offcentered in relation to the axis of the rod 14.

The drive for the valve 37 comprises here a crank lever 80 rigid with the valve pin, engaged positively, by mere thrust contact, by the end of the plunger rod 15. The crank lever 80 is biased by a coil spring 81 tending to hold the valve 37 in the closed position and carries, at the remote end from that on which the rod 15 acts, a pin 45 engaging in a face cam 46 with a cardioid-shaped projection 46B forming a double thrust retention identical to what has been described in relation to the embodiment of Figures 1 to 3.

The described transmissions, and especially the valve control drive transmission, may be power assisted if required by a special demand for a smooth operation of the key 14.

Thus, it will be appreciated that the invention realizes the proposed objects by providing:

an air outlet unit for air conditioning or ventilation systems in motor vehicles, including a small plate rigid with the rod and carrying an eye for the articulation of the shutter valve control cable, the other end of the cable acting on a lever system rigidly associated with the valve pivot pin;

an air outlet unit, in which a first arm of the lever system for operating the shutter valve carries an end pin which engages with a face cam with an upward run and a downward run of the pin being separated by a retaining projection of cardioid-like shape forming a double thrust drive;

an air outlet unit, in which said cardioid-shaped projection is provided with a notch intended for receiving the pin of the first arm to retain the arm itself in the shutter valve open position and in which, upwardly of the notch, there is provided a tip which is adapted to deflect the pin in the downward run of the face cam on said pin being urged to leave the notch;

an air outlet unit, in which the tilting key is secured to the plunger rod by means of a cardan type of swivel joint;

an air outlet unit, in which said key and rod are of unitary construction of a polymeric material and connected by at least one peduncle forming said swivel joint;

an air outlet unit, in which the movements of the oscillable and translatable key are transferred to said valve and vanes by lever transmission means acting selectively on a respective driven member.

## Claims

1. An air outlet unit for air conditioning or ventilation system in motor vehicles comprising a double array of vanes including a first aray of vanes (30) and a second array of vanes (32) arranged transversly to said first array for directing a flow of air in horizontal and respectively vertical planes, a butterfly valve (37) arranged for intercepting said flow of air, a single key (14) oscillable about two distinct axes (a, b) for selectively controlling said double array of vanes (30, 32), first means (22, 23, 62—69) for transferring the oscillation of said key (14) about said distinct axes to said vanes (30, 32), characterised in that said key (14) is also translatable longitudinally thereof, there being further provided second means (34, 51—59) for selectively transferring the translation of said key (14) to said butterfly valve (37).

2. An air outlet unit according to Claim 1, characterised in that said oscillating axes of said key (14) are reciprocally orthogonal, said key (14) being a tilting one secured for oscillation to the end of a plunger rod (15) biased by a spring (16), the oscillation about each of said orthogonal axes causing a corresponding movement of a respective one of said first and second array of vanes (30, 32), the translation of said plunger rod (15) causing the movement of said butterfly valve (37) between an open and a closed position thereof.

3. An air outlet unit according to Claims 1 and 2, characterised in that the key movements are transferred to the valve and vanes through corresponding flexible cables (22, 23, 34) of the Bowden type guided into flexible sleeves (20A, 21A, 34A).

4. An air outlet unit according to Claim 3, characterised in that said sleeves (20A, 21A, 34A) of the flexible cables are provided at least in part by canalisations moulded in the body of said outlet unit.

5. An air outlet unit according to Claims 1 to 4, characterised in that said plunger rod (15) carries rigidly associated therewith a small plate (19) for supporting the ends or the end portions of said sleeves (20A, 21A, 34A) and in that the end of a first one (22) of said cables is articulated to said key (14) at a point (22A) lying on the vertical one (a) of said oscillation axes offcentered with respect to the horizontal one (b) of said oscillation axes and in that the end of a second one (23) of said cables is articulated to said key (14) at a point (23A) lying on said horizontal oscillation axis (b) offcentered with respect to said vertical oscillation axis (a).

6. An air outlet unit according to the preceding claims, characterised in that it further comprises a lever system (36) for operating said butterfly valve (37), said lever system including a first arm (40) keyed to a pivot pin (41) of said valve and biased by a hairpin spring (42) and a second arm (43), freely rotatable on said pivot pin (41), adapted to engage positively with an entrainment wing (44) carried by said first arm (40); a third one (34) of said cables acting on said second arm (43).

7. An air outlet unit according to the preceding claims, characterised in that it comprises a first vertical lay lever system (51, 52, 53) for controlling said horizontal vane (30) array, a second horizontal lay lever system (56) for controlling said vertical vane (32) array and a third horizontal lay lever system (62—67) for controlling said butterfly valve (37); said first and second lever systems being rigidly associated with the key upon translation thereof; said third lever system being provided with a right-angle crank-and-slot link adapted to allow the key (14) to freely return when the valve is held back into the open position by the action of a double thrust retaining device.

8. An air outlet unit according to Claim 7, characterised in that said double thrust retaining device is of the ram type.

9. An air outlet unit according to Claims 1 and 2, characterised in that the transfer of the key movements to the valve and double vane array is partly effectuable by the first lever means and partially effectuable by flexible cables.

10. An air outlet unit according to Claim 9, characterised in that said third lever system for transmission of movement to said butterfly valve (37) includes a crank arm (80) rigid with the valve pin (45), engaged positively by thrust contact by the end of said plunger rod (15), said crank arm (80) being biased by a coil spring (81) tending to hold the valve in said closed position and being provided — at the remote end from that engaged by said rod — with a pin (48) engaging a face cam (46) with a cardioid-shaped retaining projection (46B) to form said double thrust retaining device.

**Patentansprüche**

1. Luftdüse für Klimatisierungs- oder Belüftungssysteme in Kraftfahrzeugen, mit einer Doppelreihe von Rippen, die eine erste Reihe von Rippen (30) und eine quer zur genannten ersten Reihe angeordnete zweite Reihe von Rippen (32) umfaßt, um einen Luftstrom in eine horizontale bzw. eine vertikale Ebene zu lenken, einer Drosselklappe (37), die befähigt ist, diesen Luftstron zu unterbrechen, einem einzigen Taster (14), der um zwei gesonderte Achsen (a, b) schwenkbar ist, zur selektiven Steuerung der Doppelreihe von Rippen (30, 32) und ersten Einrichtungen (22, 23, 62—69) zur Übertragung der Schwenkung des Tasters (14) un die genannten gesonderten Achsen an die Rippen (30, 32), dadurch gekennzeichnet, daß der Taster (14) auch in seiner Längsrichtung verschiebbar ist und weitere zweite Einrichtungen (34, 51—59) vorgesehen sind, um wahlweise die Verschiebung des Tasters (14) auf die Drosselklappe (37) zu übertragen.

2. Luftdüse nach Anspruch 1, dadurch gekennzeichnet, daß die Schwenkachsen des Tasters (14) senkrecht zueinander verlaufen und der Taster (14) ein Kipptaster ist, der zur Verschwenkung am Ende einer durch eine Feder (16) belasteten Kolbenstange (15) befestigt ist, wobei die Verschwenkung um eine jede der senkrecht zueinander verlaufenden Achsen eine entsprechende Bewegung einer der ersten oder der zweiten Reihe von Rippen (30, 32) verursacht, wie auch die Verschiebung der Kolbenstange (15) die bewegung der Drosselklappe (37) zwischen einer Offenstellung und einer Schließstellung desselben verursacht.

3. Luftdüse nach den Ansprüchen 1 und 2, dadurch gekennzeichnet, daß die Bewegungen des Drucktasters auf die Klappe und die Rippen über entsprechende biegsame Kabel (22, 23, 34) nach Art der Bowden Züge, die in biegsamen Hüllen (20A, 21A, 34A) geführt sind, übertragen werden.

4. Luftdüse nach Anspruch 3, dadurch gekennzeichnet, daß die Hüllen (20A, 21A, 34A) der biegsamen Kabel zumindst teilweise durch im Körper der Düse ausgebildete Kanäle gebildet sind.

5. Luftdüse nach den Ansprüchen 1 bis 4, dadurch gekennzeichnet, daß die Kolbenstange (15) eine starr ihr zugeordnete kleine Platte (19) zur Halterung der Enden oder der Endteile der Hüllen (20A, 21A, 34A) trägt und daß das Ende eines ersten (22) der genannten Kabel am Taster (14) an einer Stelle (22A) angelenkt ist, die auf der vertikalen Achse (a) der Schwenkachsen außermittig in bezug auf die horizontale Achse (b) der Schwenkachsen liegt, und daß das Ende des zweiten (23) der genannten Seile am Taster (14) an einer Stelle (23A) angelenkt ist, die auf der horizontalen Achsen (b) außermittig in bezug auf die vertikale schwenkachse (a) liegt.

6. Luftdüse nach einem der vorhergehenden Ansprüche, dadurch gekennzeichnet, daß sie weiter ein Hebelsystem (36) für die Betätigung der Drosselklappe (37) aufweist, welches einen ersten Arm besizt (40), der auf einem Schwenkzapfen (41) der Klappe befestigt und durch eine Haarnadelfeder (42) belastet ist, und einen zweiten Arm (43), der frei auf dem Schwenkzapfen (41) drehbar und befähigt ist, positiv an einem Mitnehmerflügel (44) anzugreifen, der durch den ersten Arm (40) gehalten wird, wobei ein drittes (34) der genannten Kable auf den zweiten Arm (43) wirkt.

7. Luftdüse nach einem der vorhergehenden Ansprüche, dadurch gekennzeichnet, daß sie ein erstes Hebelsystem (51, 52, 53) in vertikaler Lage zur Steuerung der horizontalen Rippenreihe (30), ein zweites Hebelsystem (56) in horizontaler Lage zur Steuerung der vertikalen Rippenreihe (32) und ein drittes Hebelsystem (62—67) in horizontaler Lage zur Steuerung der Drosselklappe (37) aufweist, wobei das erste und das zweite Hebelsystem starr mit dem Taster bei dessen Verschiebung verbunden sind und das dritte Hebelsystem mit eines Kurbelkulisse versehen ist, welche es dem Taster (14) ermöglicht, frei zurückzukehren, wenn die Klappe durch die Wirkung einer Zweistufen-Druckmechanik in die Offenstellung zurückgehalten wird.

8. Luftdüse nach Anspruch 7, dadurch gekennzeichnet, daß die Zweistufen-Druckmechanik eine Stößelausführung ist.

9. Luftdüse nach den Ansprüchen 1 und 2, dadurch gekennzeichnet, daß die Übertragung der Tasterbewegungen auf die Klappe und die doppelte Rippenreihe teilweise durch erste Hebeleinrichtungen und teilweise durch beigsame Kabel durchgeführt wird.

10. Luftdüse nach Anspruch 9, dadurch gekennzeichnet, daß das dritte hebelsystem zur Übertragung der Bewegung auf die Drosselklappe (37) einen Kurbelarm (80) aufweist, der starr mit dem Klappenstift (45) verbunden ist, welcher positiv durch Druckkontakt mit dem Ende der Kolbenstange (15) in Eingriff steht, wobei der Kurbelarm (80) durch eine Spiralfeder (81) belastet ist, welche bestebt ist, die Klappe in Schließstellung zu halten, und der am entfernten Ende des mit der genannten Stange im Eingriff stehenden Ende mit einem Stift (48) versehen ist, der in eine Plankurve (46) mit einem herzförmigen Halteforsatz (46B) zur Bildung der genannten Zweistufen-Druckmechanik eingreift.

## Revendications

1. Unité de sortie d'air pour système de conditionnement d'air ou de ventilation dans des véhicules à moteur, comprenant une double rangée de palettes comportant une première rangée de palettes (30) et une seconde rangée de palettes (32) disposée transversalement à ladite première rangée pour diriger un flux d'air dans des plans horizontaux et respectivement verticaux, une vanne-papillon (37) montée de façon à intercepter ledit flux d'air, unique clé (14) pouvant osciller autour de deux axes distincts (a, b) par commander sélectivement ladite double rangée de palettes (30, 32), des premiers moyens (22, 23, 62—69) pour transmettre le mouvement oscillant de ladite clé (14) autour desdits axes distincts auxdites palettes (30, 32), caractérisée en ce que ladite clé (14) peut également effectuer un mouvement de translation longitudinal, des seconds moyens (34, 51—59) étant en outre prévus pour transmettre sélectivement le mouvement de translation de ladite clé (14) à ladite vanne-papillon (37).

2. Unité de sortie d'air selon la revendication 1, caractérisée en ce que lesdits axes d'oscillation de ladite clé (14) sont réciproquement orthogonaux, ladite clé (14) étant une clé basculante fixée de façon à osciller à une extrémité d'une tige plongeuse (15) sollicitée par un ressort (16), le mouvement oscillant autour de chacun desdits axes orthogonaux provoquant un mouvement correspondant de l'une desdites première et seconde rangées de palettes respectives (30, 32), le mouvement de translation de ladite tige plongeuse (15) provoquant le mouvement de ladite vanne-papillon (37) entre une position ouverte et une position fermée.

3. Unité de sortie d'air selon les revendications 1 et 2, caractérisée en ce que les mouvements de la clé sont transmis à la vanne et aux palettes par des câbles flexibles correspondants (22, 23, 34) du type Bowden guidés dans des gaines flexibles (20A, 21A, 34A).

4. Unité de sortie d'air selon la revendication 3, caractérisée en ce que ladites gaines (20A, 21A, 34A) des câbles flexibles sont constituées, au moins en partie, par des canalisations moulées dans le corps de ladite unité de sortie d'air.

5. Unité de sortie d'air selon les revendications 1 à 4, caractérisée en ce que ladite tige plongeuse (15) supporte une petite plaque (19) qui lui est rigidement associée et est destinée à supporter les extrémités ou les portions d'extrémités desdites gaines (20A, 21A, 34A), et en ce que l'extrémité d'un premier (22) desdits câbles est articulée à ladite clé (14) en un point (22A) situé sur l'axe vertical (a) desdits axes d'oscillation, excentré par rapport à l'axe horizontal (b) desdits axes d'oscillation, et en ce que l'extrémité d'un second (23) desdits câbles est articulée à ladite clé (14) en un point (23A) situé sur ledit axe d'oscillation horizontal (b) excentré par rapport audit axe d'oscillation vertical (a).

6. Unité de sortie d'air selon l'une quelconque des revendications précédentes, caractérisée en ce qu'elle comprend en outre un système de levier (36) pour actionner ladite vanne-papillon (37), ledit système de levier comprenant un premier bras (40) calé sur un axe de pivotement (41) de ladite vanne et sollicité par un ressort en épingle à cheveux (42) et un second bras (43) pouvant tourner librement sur ledit axe de pivotement (41), adapté à venir en engagement positif avec une aile d'entraînement (44) supportée par ledit premier bras (40), un troisième (34) desdits câbles agissant sur ledit second bras (43).

7. Unité de sortie d'air selon l'une quelconque des revendications précédentes, caractérisée en ce qu'elle comprend un premier système de levier (51, 52, 53) monté verticalement pour commander ledit ensemble de palettes horizontales (30), un second système de levier (56) monté horizontalement pour commander ladite rangée de palettes verticales (32) et un troisième système de levier (62—67) monté horizontalement pour commander ladite vanne-papillon (37); lesdits premier et second systèmes de levier étant solidaires de la clé lors de son mouvement de translation; ledit trosième système de levier étant muni d'une liaison à angle droit à manivelle et fente adaptée pour permettre à la clé (14) de revenir librement quand la vanne est maintenue dans la position ouverte sous l'action d'un dispositif de retenue à va-et-vient.

8. Unité de sortie d'air selon la revendication 7, caractérisée en ce que ledit dispositif de retenue à va-et-vient est du type à vérin.

9. Unité de sortie d'air selon les revendications 1 et 2, caractérisée en ce que la transmission des mouvements de la clé à la vanne et à la double rangée de palettes peut être réalisée en partie par des premiers moyens à levier et en partie par des câbles flexibles.

10. Unité de sortie d'air selon la revendication 9, caractérisée en ce que ledit trosième système de levier destiné à la transmission du mouvement à ladite vanne-papillon (37) comprend un bras de manivelle (80) solidaire de l'axe (45) de la vanne, poussé positivement par un contact par l'extrémité de ladite tige plongeuse (15), ledit bras de manivelle (80) étant sollicité par un ressort hélicoïdal (81) tendant à maintenir la vanne dans ladite position fermée et étant muni — à l'extrémité éloignée de celle qui est en engagement avec ladite tige — d'une tige (48) coopérant avec une came frontale (46) comprenant une saillie de retenue en forme de cardioïde (46B) pour former ledit dispositif de retenue à va-et-vient.

Fig. 1

Fig. 3

Fig. 2

Fig. 4

Fig. 5

Fig. 6

Fig. 7

Fig. 8

# Fig. 9

# Fig. 10